(19) Europäisches Patentamt European Patent Office Office européen des brevets

(11) **EP 3 688 743 B1**

(12) **EUROPÄISCHE PATENTSCHRIFT**

(45) Veröffentlichungstag und Bekanntmachung des Hinweises auf die Patenterteilung:
**11.01.2023 Patentblatt 2023/02**

(21) Anmeldenummer: **18706201.3**

(22) Anmeldetag: **01.02.2018**

(51) Internationale Patentklassifikation (IPC):
***G09B 21/00*** (2006.01)

(52) Gemeinsame Patentklassifikation (CPC):
**G09B 21/006**

(86) Internationale Anmeldenummer:
**PCT/EP2018/052502**

(87) Internationale Veröffentlichungsnummer:
**WO 2019/063132 (04.04.2019 Gazette 2019/14)**

(54) **EINRICHTUNG ZUR UNTERSTÜTZUNG DER MOBILITÄT SEHBEHINDERTER PERSONEN IM STRASSENVERKEHR**

DEVICE FOR SUPPORTING THE MOBILITY OF VISUALLY IMPAIRED PEOPLE IN ROAD TRAFFIC

DISPOSITIF D'ASSISTANCE À LA MOBILITÉ DE PERSONNES À DÉFICIENCE VISUELLE DANS LE TRAFIC ROUTIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2017 DE 102017009187**

(43) Veröffentlichungstag der Anmeldung:
**05.08.2020 Patentblatt 2020/32**

(73) Patentinhaber: **RTB GmbH&Co.KG**
**33175 Bad Lippspringe (DE)**

(72) Erfinder: **HEGEMANN, Andreas**
**59368 Werne (DE)**

(74) Vertreter: **Schaumburg und Partner**
**Patentanwälte mbB**
**Postfach 86 07 48**
**81634 München (DE)**

(56) Entgegenhaltungen:
**EP-A1- 3 156 765     US-A- 5 689 269**
**US-A1- 2016 171 883**

EP 3 688 743 B1

**Beschreibung**

Die Erfindung betrifft eine Einrichtung zur Unterstützung der Mobilität sehbehinderter Personen im Straßenverkehr. Sie geht aus von der DE 197 14 156 C1.

An Fußgängerüberwegen mit Verkehrsampeln senden akustische Signalgeber Orientierungssignale und Freigabesignale aus. Orientierungssignale ermöglichen es einem Sehbehinderten den Ampelmast zu findet. Freigabesignale werden zur Fußgängergrünzeit ausgegeben und signalisieren dem Sehbehinderten, dass er die Straße überqueren kann. Bei der gewünschten Lautstärke der akustischen Signale kommt es häufig zu einem Zielkonflikt: Anwohner wünschen sich eine möglichst geringe Lautstärke der akustischen Signale während Sehbehinderte eine höhere Lautstärke bevorzugen.

Aus der DE 197 14 156 C1 ist ein Informationssystem für Personen im öffentlichen Raum, insbesondere Blinde oder Sehbehinderte bekannt, mit einer Informationsbake und einem transportablen Benutzergerät. Letzteres sendet fortwährend ein Requestsignal. Die Informationsbake sendet auf den Empfang des Requestsignals eine Nachricht aus, die von dem Benutzergerät empfangen und in ein Aufmerksamkeitssignal gewandelt wird.

In einer Veröffentlichung des kowoma GPS-Forum vom 13.02.2008 mit dem Titel "GPS-Anforderungen" (http://www.kowoma.de/GPS/Fehlerquellen.htm) werden die Fehlerquellen des GPS beschrieben, die zu einer Ungenauigkeit bei der Positionsbestimmung mit GPS führen.

Das Dokument EP 3 156 765 A1 offenbart ein System zur Wegeleitung einer Person längs eines Weges mit Hilfe akustischer Signale, die von Signalgebern erzeugt werden, wenn diese ein Steuerbefehl von einem von der Person mitgeführten mobilen Gerät oder einer Steuereinheit empfangen. Das mobile Gerät und die Signalgeber kommunizieren gemäß Bluetooth-Standard, wobei die Signalgeber fortwährend Daten aussenden, die von dem mobilen Gerät empfangen werden, wenn dieses in Funkreichweite ist.

Das Dokument US 5 689 269 A offenbart ein System, bei dem die relative Ordnung von zwei Geräten so gelöst ist, dass beide Geräte über GPS-Empfänger verfügen und deren Daten miteinander abgeglichen werden.

Aufgabe der Erfindung ist es, eine Einrichtung zur Unterstützung der Mobilität sehbehinderter Personen im Straßenverkehr vorzuschlagen, die eine automatische Anforderung des Freigabesignals ermöglicht und/oder die Lautstärke der akustischen Signale nur dann anhebt, wenn sich ein Sehbehinderter im Umfeld der Fußgängerampel befindet.

Der anordnungsbezogene Teil der Aufgabe wird durch die Merkmale des Anspruchs 1 und der verfahrensbezogene Teil durch die Merkmale des Anspruchs 4 gelöst.

Gemäß einer ersten Variante des erfindungsgemäßen Verfahrens zum Betrieb der vorgenannten Anordnung sendet das Kommunikationsgerät fortwährend einen Aufmerksamkeitshinweis aus. Das Blindenleitgerät schaltet auf den Empfang des Aufmerksamkeitshinweises hin ein optisches Freigabesignal ein, sendet Fußgänger-Orientierungssignale und/oder Freigabesignale und/oder verändert deren Lautstärke.

Gemäß einer zweiten Variante des erfindungsgemäßen Verfahrens zum Betrieb der vorgenannten Anordnung sendet das Blindenleitgerät fortwährend ein Bereitschaftssignal und das Kommunikationsgerät auf den Empfang des Bereitschaftssignals einen Aufmerksamkeitshinweis aus, auf dessen Empfang das Blindenleitgerät ein optisches Freigabesignal einschaltet, akustische Fußgänger-Orientierungssignale und/oder akustische Freigabesignale aussendet und/oder deren Lautstärke verändert.

Bei der zweiten Variante sind die Persönlichkeitsrechte des Sehbehinderten besser geschützt, da Unbefugte nicht ständig und an jedem Ort einen Hinweis auf den Sehbehinderten empfangen können, sondern allenfalls dann, wenn eine Kommunikation zwischen dessen Kommunikationsgerät und dem Blindenleitgerät stattfindet.

Entsprechend einer bevorzugten Ausbildung der Erfindung ist deren Kommunikationsgerät ein Mobiltelefon, insbesondere ein Smartphone. Sie macht sich dabei zu Nutze, dass diese Geräte besonders unter sehbehinderten Personen weit verbreitet sind und im Allgemeinen über eine Bluetooth-LE-Schnittstelle und einen GPS-Empfänger verfügen.

Mit einem in dem Blindenleitgerät eingesetzten Bluetooth-LE -Modul (BLE) kann festgestellt werden, ob sich in der näheren Umgebung ein Sehbehinderter befindet. Dazu sendet das Smartphone des Sehbehinderten eine festgelegte Kennung per BLE. Wird diese Kennung von dem Blindenleitgerät empfangen, bereitet es sich darauf vor, ein optisches und akustisches Fußgängerfreigabesignal einzuschalten, bei Erreichen eines vorgebbaren Abstandes von dem Blindenleitgerät bzw. Ampelmast das Fußgängerfreigabesignal einzuschalten oder auch zusätzlich die Lautstärke seiner Signale entsprechend dem Abstand des Sehbehinderten einzustellen.

Bislang muss ein Sehbehinderter zunächst den Ampelmast suchen und ertasten. Anschließend muss er den Anforderungstaster am Ampelmast finden und betätigten. Wird hingegen, wie dies in einer bevorzugten Weiterbildung der Erfindung vorgeschlagen wird, der Weg des Sehbehinderten verfolgt und sein Verweilen direkt vor dem Fußgängerüberweg erkannt, wird dies zur automatischen Anforderung des Freigabesignals genutzt. Außerdem ist es möglich, die Lautstärke des Orientierungssignals mit fortschreitender Annäherung kontinuierlich zu reduzieren.

Entsprechend einer vorteilhaften Weiterbildung des erfindungsgemäßen Verfahrens wird die Position des Blindenleitgerätes oder der Blindenleitgeräte einmalig ermittelt und in deren Positionsspeicher abgelegt.

Entsprechend einer vorteilhaften Weiterbildung der Erfindung wird die aktuelle Position des Kommunikationsgerätes fortwährend neu ermittelt, mit dem Inhalt des Positionsspeichers verglichen und aus der jeweiligen Differenz die Bewegungsrichtung des Trägers des Kommunikationsgerätes ermittelt.

Dadurch wird es möglich, bei Straßenverkehrsanlagen, z. B. Straßenkreuzungen mit mehreren in verschiedenen Richtungen verlaufenden Fußgängerüberwegen, die jeweils mit einem Blindenleitgerät ausgestattet sind, auf Grund der Bewegungsrichtung des Trägers des Kommunikationsgerätes nur dasjenige Blindenleitgerät anzusprechen, zu dem hin der Träger des Kommunikationsgerätes strebt.

Ein Problem ist die Ungenauigkeit der Positionsmessung. Diese ist verursacht durch folgende Einflüsse (Angaben entnommen www.kowoma.de/GPS/Fehlerquellen.htm):

| | |
|---|---|
| Störungen durch die Ionosphäre | ± 5 m |
| Schwankungen der Satellitenumlaufbahnen | ± 2.5 m |
| Uhrenfehler der Satelliten | ± 2 m |
| Mehrwegeeffekt | ± 1 m |
| Störungen durch die Troposphäre | ± 0.5 m |
| Rechnungs- und Rundungsfehler | ± 1 m |

In der Regel befinden sich an einer Straßenverkehrsanlage mehrere Blindenleitgeräte. Zur Ermittlung der Abstände von einzelnen Sehbehinderten kann jedes Blindenleitgerät mit einem GPS-Empfänger ausgerüstet sein. Die relative Position der einzelnen Blindenleitgeräte zueinander kann aber auch einmalig mit einem portablen GPS-Gerät ermittelt und in dem Positionsspeicher hinterlegt werden. Die Position wird dann nur von einem oder wenigen Blindenleitgeräten gemessen und anschließend an alle übrigen übertragen. Alle weiteren Blindenleitgeräte können dann den hinterlegten Offset in die Abstandsberechnung mit einbeziehen und den Abstand der Sehbehinderten ermitteln.

Bei DGPS wird die Differenz aus einer empfangen GPS-Koordinate und der exakt vermessenen Koordinate des Empfängers gebildet. Diese Differenz wird in Form von Korrekturdaten an andere Empfänger übermittelt. Die exakte Vermessung des Empfängers und die Übermittlung der Korrekturdaten ist bei der hier vorgeschlagenen Erfindung jedoch nicht nötig, aber im Rahmen der Erfindung möglich. Dadurch vereinfacht sich die Installation erheblich. Es müssen nur relative Daten zueinander verarbeitet werden. Die absolute Position braucht nicht ermittelt zu werden.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert. Es zeigt

Fig. 1     eine Straßenkreuzung mit ampelgesicherten Fußgängerüberwegen,

Fig. 2     ein Blockschaltbild einer erfindungsgemäßen Einrichtung.

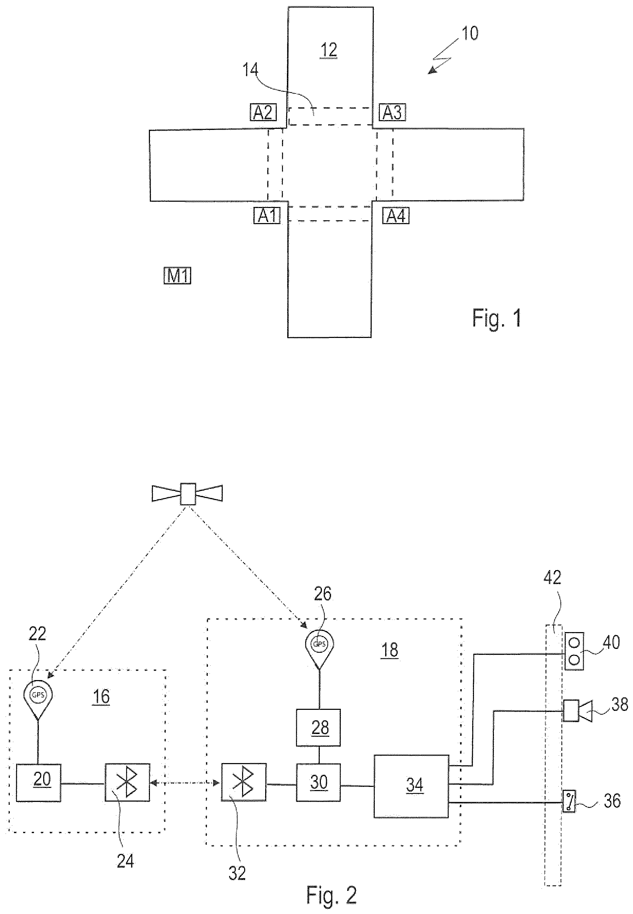

In Fig. 1 ist eine Straßenkreuzung 10 mit Fahrspuren 12 und Fußgängerüberwegen 14 dargestellt. An nicht dargestellten Ampelmasten befinden sich neben ebenfalls nicht dargestellten optischen Verkehrsampeln und Anforderungstastern Blindenleitgeräte A1 - A4, die an Hand der Fig. 2 näher beschrieben sind und jeweils neben anderem einen Akustikgeber und einen GNSS-Empfänger umfassen. Ein Sehbehinderter mit einem GNSS-Empfänger M1 befinde sich im Umfeld der Straßenkreuzung 10 (GNSS = global navigation satellite system, z.B. GPS, Glonas, Beidou, Galileo).

Fig. 2 zeigt ein Blockschaltbild einer erfindungsgemäßen Einrichtung. Darin ist ein von einem Sehbehinderten mitzuführendes Smartphone mit 16 und ein Blindenleitgerät mit 18 bezeichnet. Die an sich bekannte Zentraleinheit 20 des Smartphones 16 ist mit einem ersten GPS-Empfänger 22 und einer ersten Bluetooth-Schnittstelle 24 ausgestattet. Das Blindenleitgerät 18 umfasst einen zweiten GPS-Empfänger 26, dessen empfangene Positionsdaten in einem Positionsspeicher 28 abgespeichert werden, eine zweite Bluetooth-Schnittstelle 32, einen Vergleicher 30 und eine Ampelsteuereinheit 34. An letztere sind wenigstens ein Anforderungstaster 36, ein Akustikgeber 38 und eine Fußgängerampel 40 angeschlossen. Die Baugruppen 36, 38, 40 sind an einem Ampelmast 42 angebracht.

Das Blindenleitgerät 18 sendet über die zweite Bluetooth-Schnittstelle 32 fortwährend ein Bereitschaftssignal aus. Sobald das Smartphone 16 über seine erste Bluetooth-Schnittstelle 24 dieses Bereitschaftssignal empfängt, sendet es einen Aufmerksamkeitshinweis, der die Positionsdaten des Smartphones 16 über die Bluetooth-Verbindung 24, 32 zu dem Vergleicher 30 überträgt. Wenn der Vergleicher 30 einen vorgebbaren minimalen Abstand zwischen dem Smartphone 16 und dem Blindenleitgerät 18 erkennt hat, aktiviert das Blindenleitgerät 18 ein optisches und ein akustisches Freigabesignal. Schon mit Empfang des ersten Aufmerksamkeitshinweises werden akustische Fußgänger-Orientierungssignale ausgesendet und deren Lautstärke und nach dem Einschalten der Fußgänger-Freigabesignale deren Lautstärke abhängig von dem Abstand zwischen dem Smartphone 16 und dem Blindenleitgerät 18 verändert.

Die per GNSS gemessene Position G bestimmt sich wie folgt:

$$G = P + F1 + F2 + F3 + F4 + F5$$

Hierbei sind:

G: Gemessene Position
P: tatsächliche genaue Position
F1: Fehler des Messempfängers (Rechnungs- und Rundungsfehler, Einfluss durch Satellitengeometrie)
F2: Fehler durch Mehrwegausbreitung
F3: Fehler durch Troposphäre
F4: Fehler durch Ionosphäre
F5: Satellitenfehler (Schwankungen der Satellitenumlaufbahnen, Uhrenfehler der Satelliten)

Laut http://www.kowoma.de/gps/Fehlerquellen.htm ergeben sich folgende Werte für die Fehler:

| | |
|---|---|
| Störungen durch die Ionosphäre | $\pm$ 5 m |
| Schwankungen der Satellitenumlaufbahnen | $\pm$ 2,5 m |
| Uhrenfehler der Satelliten | $\pm$ 2 m |
| Mehrwegeeffekt | $\pm$ 1 m |
| Störungen durch die Troposphäre | $\pm$ 0,5 m |
| Rechnungs- und Rundungsfehler | $\pm$ 1 m |
| Daraus ergibt sich ein Gesamtfehler von | $\pm$ 12 m. |

Der errechnete Abstand D von dem Blindenleitgerät A1 zum Sehbehinderten M1 ist dann $G_A - G_M$. Da die Entfernung der beiden GNSS-Empfänger sehr gering ist, wird der Fehler durch die Troposphäre und durch die Ionosphäre als gleich angenommen. Für die Mehrwegausbreitung werden zwei Fälle betrachtet. Der dadurch entstehende Fehler ist bei beiden Empfängern gleich, was bei sehr geringen Distanzen anzunehmen ist.

Für die Distanz ergeben sich dann die beiden Formeln: Fehler bei gleicher Mehrwegausbreitung:

$$D = (P_A+F1_A+F2+F3+F4+F5) - (P_M+F1_M+F2+F3+F4+F5)$$

$$D = (P_A+F1_A) + (F2+F3+F4+F5) - (P_M+F1_M) - (F2+F3+F4+F5)$$

$$D = (P_A+F1_A) - (P_M+F1_M) + (F2+F3+F4+F5) - (F2+F3+F4+F5)$$

$$D = (P_A+F1_A) - (P_M+F1_M)$$

Fehler bei unterschiedlicher Mehrwegausbreitung:

$$D = (P_A+F1_A+F2_A+F3+F4+F5) - (P_M+F1_M+F2_M+F3+F4+F5)$$

$$D = (P_A+F1_A+F2_A) + (F3+F4+F5) - (P_M+F1_M+F2_M) - (F3+F4+F5)$$

$$D = (P_A+F1_A+F2_A) - (P_M+F1_M+F2_M) + (F3+F4+F5) - (F3+F4+F5)$$

$$D = (P_A+F1_A+F2_A) - (P_M+F1_M+F2_M)$$

Bei beiden Fällen sind die größten Fehlerquellen eliminiert. Der Fehler wird bei unterschiedlicher Mehrwegausbreitung etwa um den Faktor 5 reduziert. Je mehr sich die beiden GNSS-Empfänger nähern umso wahrscheinlicher werden die Empfänger auch dem gleichen Mehrwegeausbreitungsfehler unterliegen. Bei unmittelbar benachbarten Positionen sind auch die Mehrwegeausbreitungsfehler im Rahmen der geforderten Genauigkeit gleich. Entfällt auch der Fehler durch die Mehrwegeausbreitung, so halbiert sich der Fehler noch einmal. Insgesamt reduziert sich der Fehler durch das erfindungsgemäße Verfahren um etwa eine 10er-Potenz.

Nachdem der GNSS-Empfänger eine Position empfangen hat, wird die berechnete Position per Funk z.B. per Bluetooth LE zur Gegenseite übertragen. Auf beiden Seiten (Blindenleitgerät Ax - Sehbehinderter M1) wird die Differenz aus der eigenen Position und der per Funk übertragenen Position berechnet. Die Differenz ist der Abstand zwischen Blindenleitgerät Ax und Sehbehindertem M1. Dieser Abstand wird von dem Blindenleitgerät 18 ausgewertet.

## Bezugszeichenliste

| | |
|---|---|
| 10 | Straßenkreuzung |
| 12 | Fahrspur |
| 14 | Fußgängerüberweg |
| 16 | Smartphone |
| 18 | Blindenleitgerät |
| 20 | Zentraleinheit von 16 |
| 22 | erster GPS-Empfänger |
| 24 | erste Bluetooth-Schnittstelle |
| 26 | zweter GPS-Empfänger |
| 28 | Positionsspeicher |
| 30 | Vergleicher |
| 32 | zweite Bluetooth-Schnittstelle |
| 34 | Ampel-Steuereinheit |
| 36 | Anforderungstaster |
| 38 | Akustikgeber |
| 40 | Fußgängerampel |
| 42 | Ampelmast |

## Patentansprüche

1.   Einrichtung zur Unterstützung der Mobilität einer sehbehinderten Person im Straßenverkehr, umfassend

- ein von der Person mitzuführendes oder mitgeführtes drahtloses Kommunikationsgerät (16), welches wenigstens mit einem ersten Datensender, einem ersten Datenempfänger (24) und einem GPS-Empfänger (22) ausgestattet ist,
- mehrere Blindenleitgeräte (18) für eine Straßenverkehrsanlage (10) mit mehreren Fußgängerüberwegen (14), die jeweils mit einem der Blindenleitgeräte (18) ausgestattet sind, wobei das jeweilige Blindenleitgerät (18) wenigstens mit einem Akustikgeber (38), einem Positionsspeicher (28), einem zweiten Datenempfänger und einem zweiten Datensender (32) ausgestattet ist, wobei mindestens eines der Blindenleitgeräte (18) zusätzlich mit einem zweiten GPS-Empfänger (26) ausgestattet ist,
- einen Vergleicher (30), der dazu bestimmt ist, die Positionsdaten des GPS-Empfängers (22) des Kommunikationsgerätes (16) mit den Positionsdaten des zweiten GPS-Empfängers (26) oder dem Inhalt des Positionsspeichers (28) des jeweiligen Blindenleitgerätes zu vergleichen,
wobei die einmalig ermittelte relative Position der einzelnen Blindenleitgeräte (18) zueinander in deren Positionsspeicher (28) als Offset hinterlegt ist und nur eines oder ein Teil der Blindenleitgeräte (18) ausgebildet ist bzw. sind, die Position des Kommunikationsgerätes (16) durch Vergleich der Positionsdaten des GPS-Empfängers (22) des Kommunikationsgerätes (16) mit den Positionsdaten des GPS-Empfänger (26) des jeweiligen Blindenleitgerätes (18) zu messen und anschließend an alle weiteren Blindenleitgeräte (18) zu übertragen, wobei alle weiteren Blindenleitgeräte (18) ausgebildet sind, den hinterlegten Offset in die Abstandsberechnung mit einzubeziehen und den Abstand des Kommunikationsgerätes (16) des Sehbehinderten zu ermitteln.

2.   Einrichtung nach Anspruch 1, deren Kommunikationsgerät ein Mobiltelefon, insbesondere ein Smartphone (16) ist.

3.   Einrichtung nach Anspruch 1 oder 2, deren Blindenleitgeräte (18) und deren Kommunikationsgerät (26) jeweils mit einer drahtlosen Nahbereichs-Kommunikationsschnittstelle, insbesondere einer Bluetooth-LE-Schnittstelle (24; 32) ausgestattet sind.

4. Verfahren zum Betrieb der Einrichtung nach einem der Ansprüche 1 bis 3 für eine Straßenverkehrsanlage (10) mit mehreren Fußgängerüberwegen (14), die jeweils mit einem Blindenleitgerät (18) ausgestattet sind, bei dem die relative Position der einzelnen Blindenleitgeräte (A1-A4) zueinander einmalig ermittelt und in deren Positionsspeicher (28) als Offset hinterlegt wird und die Position des Kommunikationsgerätes (M1; 16) nur von einem oder von einem Teil der Blindenleitgeräten gemessen und anschließend an alle übrigen übertragen wird, worauf alle weiteren Blindenleitgeräte dann den hinterlegten Offset in die Abstandsberechnung mit einbeziehen und den Abstand des Kommunikationsgerätes (M1) des Sehbehinderten ermitteln.

5. Verfahren nach Anspruch 4, bei dem das Kommunikationsgerät (16) fortwährend einen Aufmerksamkeitshinweis aussendet und das jeweilige Blindenleitgerät (18) auf den Empfang des Aufmerksamkeitshinweises ein optisches Freigabesignal einschaltet, Fußgänger-Orientierungssignale und/oder akustische Freigabesignale aussendet und/oder deren Lautstärke verändert.

6. Verfahren nach einem der Ansprüche 4 bis 5, bei dem das Blindenleitgerät (18) fortwährend ein Bereitschaftssignal aussendet und das jeweilige Kommunikationsgerät (16) auf den Empfang des Bereitschaftssignals einen Aufmerksamkeitshinweis sendet, auf dessen Empfang das Blindenleitgerät (18) ein optisches Freigabesignal einschaltet, akustische Fußgänger-Orientierungssignale und/oder akustische Freigabesignale aussendet und/oder deren Lautstärke verändert.

7. Verfahren nach einem der Ansprüche 4 bis 6, bei dem die relative Position der einzelnen Blindenleitgeräte (A1-A4) zueinander einmalig mit einem portablen GPS-Gerät ermittelt und in deren Positionsspeicher 28) hinterlegt werden.

8. Verfahren nach einem der Ansprüche 4 bis 7, bei dem die aktuelle Position des Kommunikationsgerätes (16) fortwährend neu ermittelt und zu dem Blindenleitgerät (18) übertragen wird, dort mit dem Inhalt des Positionsspeichers (28) verglichen und aus der jeweiligen Differenz die Bewegungsrichtung des Trägers des Kommunikationsgerätes (M1) ermittelt wird.

9. Verfahren nach Anspruch 8, bei dem nach dem Verweilen des Trägers des Kommunikationsgerätes (16) in unmittelbarer Nähe des Blindenleitgerätes (18) für eine vorgegebene Zeit das optische Freigabesignal eingeschaltet und akustische Freigabesignale ausgesendet werden.

10. Verfahren nach Anspruch 8 oder 9, bei dem abhängig von der Bewegungsrichtung des Trägers des Kommunikationsgerätes (16) eines der zu steuernden Blindenleitgeräte (A1-A4) angesprochen wird.

**Claims**

1. An apparatus for assisting the mobility of a visually impaired person in road traffic, comprising

   - a wireless communication device (16) which is to be carried or is carried by the person and is equipped at least with a first data transmitter, a first data receiver (24) and a GPS receiver (22),
   - several blind guiding devices (18) for a road traffic system (10) with several pedestrian crossings (14) which are each equipped with one of the blind guiding devices (18), the respective blind guiding device (18) being equipped at least with an acoustic source (38), a position memory (28), a second data receiver and a second data transmitter (32), wherein at least one of the blind guiding devices (18) is additionally equipped with a second GPS receiver (26),
   - a comparator (30) which is designed to compare the position data of the GPS receiver (22) of the communication device (16) with the position data of the second GPS receiver (26) or the content of the position memory (28) of the respective blind guiding device,
   wherein the once-determined relative position of the individual blind guiding devices (18) to each other is stored in their position memories (28) as an offset and only one or a part of the blind guiding devices (18) is configured to measure the position of the communication device (16) by comparison of the position data of the GPS receiver (22) of the communication device (16) with the position data of the GPS receiver (26) of the respective blind guiding device (18) and then to transmit the position to all other blind guiding devices (18),
   wherein all other blind guiding devices (18) are configured to include the stored offset into the distance calculation and to determine the distance of the communication device (16) of the visually impaired.

2. The apparatus according to claim 1, the communication device thereof being a mobile phone, in particular a smartphone (16).

3. The apparatus according to claim 1 or 2, the blind guiding devices (18) thereof and the communication device (26) thereof each being equipped with a wireless near range communication interface, in particular a Bluetooth LE interface (24; 32).

4. A method for the operation of the apparatus according to one of the claims 1 to 3 for a road traffic system (10) with several pedestrian crossings (14) which are each equipped with one blind guiding device (18), in which the relative position of the individual blind guiding devices (A1-A4) to each other is determined once and stored in their position memories (28) as an offset, and the position of the communication device (M1; 16) is measured by only one or a part of the blind guiding devices and then transmitted to all others, whereupon all further blind guiding devices then include the stored offset into the distance calculation and determine the distance of the communication device (M1) of the visually impaired.

5. The method according to claim 4, in which the communication device (16) continuously sends an attention information and, upon receipt of the attention information, the respective blind guiding device (18) switches on an optical release signal, sends pedestrian orientation signals and/or acoustic release signals and/or changes their volume.

6. The method according to one of the claims 4 to 5, in which the blind guiding device (18) continuously sends a ready signal and, upon receipt of the ready signal, the respective communication device (16) sends an attention information, upon receipt of which the blind guiding device (18) switches on an optical release signal, sends acoustic pedestrian orientation signals and/or acoustic release signals and/or changes their volume.

7. The method according to one of the claims 4 to 6, in which the relative position of the individual blind guiding devices (A1-A4) to each other is determined once with a portable GPS device and stored in their position memories (28).

8. The method according to one of the claims 4 to 7, in which the current position of the communication device (16) is continuously newly determined and transmitted to the blind guiding device (18), is compared thereat to the content of the position memory (28) and, from the respective difference, the direction of movement of the carrier of the communication device (M1) is determined.

9. The method according to claim 8, in which after the carrier of the communication device (16) stayed in the direct vicinity of the blind guiding device (18) for a predetermined amount of time, the optical release signal is switched on and acoustic release signals are emitted.

10. The method according to claim 8 or 9, in which dependent on the direction of movement of the carrier of the communication device (16) one of the blind guiding devices (A1-A4) to be controlled is addressed.


**Revendications**

1. Dispositif d'assistance à la mobilité d'une personne à déficience visuelle dans la circulation routière, comprenant

- un appareil de communication sans fil (16) à porter ou étant porté par la personne et qui est équipé d'au moins un premier émetteur de données, d'un premier récepteur de données (24) et d'un récepteur GPS (22),
- plusieurs appareils de guidage d'aveugle (18) pour une installation de circulation routière (10) pourvue de plusieurs passages piétons (14) qui sont respectivement équipés d'un des appareils de guidage d'aveugle (18), l'appareil de guidage d'aveugle respectif (18) étant équipé d'au moins une source sonore (38), d'une mémoire de position (28), d'un deuxième récepteur de données et d'un deuxième émetteur de données (32), dans lequel au moins l'un des appareils de guidage d'aveugle (18) est en outre équipé d'un deuxième récepteur GPS (26),
- un comparateur (30) qui est destiné à comparer les données de position du récepteur GPS (22) de l'appareil de communication (16) avec les données de position du deuxième récepteur GPS (26) ou le contenu de la mémoire de position (28) de l'appareil de guidage d'aveugle respectif,

dans lequel la position relative déterminée une seule fois des appareils de guidage d'aveugle (18) individuels les uns par rapport aux autres est mémorisée dans leur mémoire de position (28) sous forme de décalage et un seul ou une partie des appareils de guidage d'aveugle (18) est réalisé (e) pour mesurer la position de l'appareil de communication (16) en comparant les données de position du récepteur GPS (22) de l'appareil de communication (16) avec les données de position du récepteur GPS (26) de l'appareil de guidage d'aveugle (18) respectif et pour la transmettre ensuite à tous les autres appareils de guidage d'aveugle (18),

dans lequel tous les autres appareils de guidage d'aveugle (18) sont réalisés pour inclure également le décalage mémorisé dans le calcul de distance et pour déterminer la distance de l'appareil de communication (16) du déficient visuel.

2. Dispositif selon la revendication 1 dont l'appareil de communication est un téléphone mobile, en particulier un smartphone (16).

3. Dispositif selon la revendication 1 ou 2 dont les appareils de guidage d'aveugle (18) et dont l'appareil de communication (26) sont respectivement équipés d'une interface de communication sans fil à courte portée, en particulier d'une interface Bluetooth LE (24 ; 32).

4. Procédé d'exploitation du dispositif selon l'une quelconque des revendications 1 à 3 pour une installation de circulation routière (10) pourvue de plusieurs passages piétons (14) qui sont respectivement équipés d'un appareil de guidage d'aveugle (18), dans lequel la position relative des appareils de guidage d'aveugle individuels (Al à A4) les uns par rapport aux autres est déterminée une seule fois et mémorisée dans leur mémoire de position (28) sous forme de décalage, et la position de l'appareil de communication (M1 ; 16) n'est mesurée que par un seul ou par une partie des appareils de guidage d'aveugle et est ensuite transmise à tous les autres, après quoi tous les autres appareils de guidage d'aveugle incluent également le décalage mémorisé dans le calcul de distance et déterminent la distance de l'appareil de communication (M1) du déficient visuel.

5. Procédé selon la revendication 4, dans lequel l'appareil de communication (16) émet en continu une indication d'attention, et l'appareil de guidage d'aveugle (18) respectif active un signal de libération optique suite à la réception de l'indication d'attention, émet des signaux d'orientation de piéton et/ou des signaux de libération acoustiques, et/ou modifie leur intensité sonore.

6. Procédé selon l'une quelconque des revendications 4 à 5, dans lequel l'appareil de guidage d'aveugle (18) émet en continu un signal de disponibilité, et l'appareil de communication (16) respectif émet une indication d'attention suite à la réception du signal de disponibilité, suite à la réception duquel l'appareil de guidage d'aveugle (18) active un signal de libération optique, émet des signaux d'orientation de piéton acoustiques et/ou des signaux de libération acoustiques, et/ou modifie leur intensité sonore.

7. Procédé selon l'une quelconque des revendications 4 à 6, dans lequel la position relative des appareils de guidage d'aveugle (Al à A4) individuels les uns par rapport aux autres est déterminée une seule fois à l'aide d'un appareil GPS portable et est mémorisée dans la mémoire de position (28) de celui-ci.

8. Procédé selon l'une quelconque des revendications 4 à 7, dans lequel la position actuelle de l'appareil de communication (16) est en continu déterminée à nouveau, et est transmise à l'appareil de guidage d'aveugle (18), y est comparée avec le contenu de la mémoire de position (28), et à partir de la différence respective, la direction de mouvement du porteur de l'appareil de communication (M1) est déterminée.

9. Procédé selon la revendication 8, dans lequel, après le séjour du porteur de l'appareil de communication (16) à proximité immédiate de l'appareil de guidage d'aveugle (18) pendant un délai prédéfini, le signal de libération optique est activé et des signaux de libération acoustiques sont émis.

10. Procédé selon la revendication 8 ou 9, dans lequel l'un des appareils de guidage d'aveugle (Al à A4) à commander est adressé en fonction de la direction de mouvement du porteur de l'appareil de communication (16) .

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19714156 C1
- EP 3156765 A1
- US 5689269 A

**In der Beschreibung aufgeführte Nicht-Patentliteratur**

- *GPS-Anforderungen,* 13. Februar 2008, http://www.kowoma.de/GPS/Fehlerquellen.htm